# EUROPÄISCHE PATENTANMELDUNG

(11) **EP 0 682 226 A2**
(43) Veröffentlichungstag der Anmeldung: **15.11.1995**
(21) Anmeldenummer: 95106062.3
(22) Anmeldetag: 22.04.1995
(51) Int. Cl.: G01B 11/30

(54) **Oberflächenprüfvorrichtung**

(30) Priorität: 10.05.1994 DE 4416493
(71) Anmelder: ROBERT BOSCH GMBH, 70442 Stuttgart (DE)
(72) Erfinder: Wocher, Berthold, Dr. Ing., D-71229 Leonberg (DE); Handtmann, Dieter, Dr. rer. nat., D-71065 Sindelfingen (DE); Prinzhausen, Friedrich, D-70619 Stuttgart (DE); Lohner, Eberhard, D-71735 Eberdingen (DE); Steinlechner, Siegbert, Dipl.-Ing., D-71229 Leonberg (DE); Imhof, Volker, Ing., D-70806 Kornwestheim (DE); Streibl, Norbert, Dr. rer. nat., D-71229 Leonberg (DE)

(57) **Zusammenfassung**

Es wird eine Vorrichtung zum Prüfen von Oberflächen (12) in Hohlräumen (13) von Werkstücken (14) vorgeschlagen, bei der auf die zu prüfende Oberfläche (12) eine optische Meßstrahlung (16) gerichtet ist und die von der Oberfläche (12) zurückgeworfene Strahlung (21, 22a, 22b) als Kriterium für die Oberflächenbeschaffenheit ausgewertet wird. Die erfindungsgemäße Vorrichtung enthält eine Sonde, die in zwei Teile (10, 11) aufgeteilt ist. Das erste Teil (10), das wenigstens teilweise in den Hohlraum (13) eintaucht, kann eine Drehbewegung gegenüber dem zweiten, ruhenden Sondenteil (11) durchführen. Die erfindungsgemäße Vorrichtung ermöglicht ein vollständiges Prüfen der Oberfläche (12), ohne daß das Werkstück (14) bewegt werden muß.

## Beschreibung

### Stand der Technik

Die Erfindung geht aus von einer Vorrichtung zum Prüfen von Oberflächen in Hohlräumen nach der Gattung des Hauptanspruchs. Aus der GB-A 2 126 715 ist eine Sonde zum automatischen Prüfen von Oberflächen bekannt, die insbesondere zum Prüfen von Oberflächen in Bohrungen geeignet ist. Die von einer Strahlungsquelle abgegebene Strahlung wird über einen zentralen Kanal der Sonde in die Bohrung eingekoppelt und über einen Umlenkspiegel auf die Oberfläche geworfen. Die von der Oberfläche zurückgeworfene Strahlung wird nach Hell- und Dunkelfeld getrennt ausgewertet. Die Strahlung des Hellfeldes gelangt über den zentralen Kanal der Sonde in den Außenbereich und wird von dort mit einem Strahlteiler von der eingekoppelten Strahlung getrennt. Die Strahlung des Dunkelfeldes wird winkelaufgelost über sektorförmige Strahlungsführungen, die als Lichtleiter realisiert sind, in den Außenbereich geleitet. Für jede Strahlungsführung ist ein separater Strahlungssensor vorgesehen.

Die vorbekannte Vorrichtung zum Prüfen von Oberflächen ist insbesondere geeignet zum Prüfen von Oberflächen in Bohrungen von Werkstücken, die gegenüber der feststehenden Sonde drehbar sind. Durch die Drehbewegung des Werkstücks und eine lineare Verschiebung in Bohrungsrichtung zwischen Sonde und Werkstück ist ein vollständiges Erfassen der Oberfläche der Bohrung möglich.

Der Erfindung liegt die Aufgabe zugrunde, eine Vorrichtung zum Prüfen von Oberflächen in Hohlräumen anzugeben, bei der eine Drehbewegung des Werkstücks nicht erforderlich ist.

Die Aufgabe wird durch die im Hauptanspruch angegebenen Merkmale gelöst.

### Vorteile der Erfindung

Die erfindungsgemäße Vorrichtung zum Prüfen von Oberflächen in Hohlräumen weist den Vorteil auf, daß eine hohe Prüfgeschwindigkeit erreichbar ist bei Werkstücken, die eine große Unwucht oder beispielsweise ein hohes Massenträgheitsmoment aufweisen, so daß eine Rotationsbewegung des Werkstücks problematisch oder nicht möglich ist. Erfindungsgemäß ist vorgesehen, daß ein erstes, in den Hohlraum eintauchendes Teil der Sonde, das die Strahlungsführungen enthält, drehbar ist gegenüber einem zweiten, feststehenden Teil der Sonde, das die Sensoranordnung aufweist. Das erste Teil der Sonde kann mit einer hohen Drehzahl und insbesondere einer hohen Winkelbeschleunigung gegenüber dem ruhenden Werkstück bewegt werden. Die damit erreichbare hohe Prüfgeschwindigkeit ermöglicht das Prüfen von Werkstücken, die von Werkzeugmaschinen in der Massenproduktion bei kurzen Taktzeiten bearbeitet werden.
Vorteilhafte Weiterbildungen und Ausgestaltungen der erfindungsgemäßen Vorrichtung zum Prüfen von Oberflächen in Hohlräumen ergeben sich aus abhängigen Ansprüchen.

Das erste und das zweite Teil der Sonde können beispielsweise über Lichtleiter miteinander verbunden sein, die eine Verdrehung der beiden Sondenteile über einen Winkel von 360° ohne weiteres ermöglichen. Eine besonders vorteilhafte Maßnahme ermöglicht dagegen eine kontinuierliche Drehbewegung in einer Drehrichtung des ersten Sondenteils gegenüber dem zweiten Sondenteil. Erfindungsgemäß ist eine berührungsfreie optische Kommutierung zwischen den beiden Sondenteilen vorgesehen, die eine Zuordnung der in den Strahlungsführungen des ersten Sondenteils weitergeleiteten Strahlungen zu den den Strahlungsführungen zugeordneten Strahlungsssensoren im zweiten Sondenteil vornimmt.

Gemäß einem ersten Ausführungsbeispiel der optischen Kommutierung ist vorgesehen, daß die im ersten Sondenteil angeordneten Strahlführungen die winkelaufgelösten Strahlungen in entsprechend radial aufgelöste Strahlungen umsetzt, die zur Übertragung an das zweite Sondenteil vorgesehen sind.

Gemäß einem anderen Ausführungsbeispiel der optischen Kommutierung ist vorgesehen, daß im ersten Sondenteil eine Wellenlängencodierung der optischen Strahlungen vorgesehen ist, die den Strahlungsführungen jeweils unterschiedliche Wellenlängen der optischen Strahlung zuordnet und daß die wellenlängencodierten Strahlungen zur Übertragung an das zweite Sondenteil vorgesehen sind.

Gemäß einem weiteren Ausführungsbeispiel der optischen Kommutierung ist vorgesehen, daß den im ersten Sondenteil angeordneten Strahlungsführungen jeweils holografisch-optische Elemente zugeordnet sind und daß die von den holografisch-optischen Elementen abgegebenen Strahlungen zur Übertragung zum zweiten Sondenteil vorgesehen sind.

Vorteilhafte Ausgestaltungen betreffen die Strahlungsquelle, die beispielsweise als Weißlichtquelle realisiert sein kann. Diese Maßnahme weist insbesondere Vorteile bei demjenigen Ausführungsbeispiel der optischen Kommutierung auf, bei dem eine Wellenlängencodierung der optischen Strahlungen vorgesehen ist. Das weiße Licht enthält diejenigen Strahlungsanteile, die durch die Wellenlängencodierung herausgetrennt werden. Die Strahlungsquelle kann auch vorzugsweise als Halbleiterlaser oder als eine preiswerte Leuchtdiode realisiert sein. Die für die Wellenlängencodierung erforderlichen unterschiedlichen Wellenlängen der optischen Strahlung werden vorzugsweise durch mehrere Halbleiterlaser oder durch mehrere Leuchtdioden bereitgestellt. Der Vorteil bei der Verwendung von einem oder mehrerer Halbleiterlasern gegenüber einer oder mehrerer Leuchtdioden liegt darin, daß der Halbleiterlaser eine erheblich höhere Strahlungsleistung abzugeben in der Lage ist, die zu einem günstigen Signal- zu Störsignalverhältnis führt. Die divergenzarme Emission der Laserstrahlung reduziert die gegebenenenfalls erforderlichen Komponenten für die Strahlungsführung. Der Vorteil bei der Verwendung von einer oder mehrerer Leuchtdioden liegt darin, daß die Leuchtdioden im Vergleich zum Halbleiterlaser erheblich preisgünstiger sind.

Eine vorteilhafte Ausgestaltung betrifft die Strahlungsführungen, die vorzugsweise mit Lichtleitern realisiert sind. Die Strahlungsführung in Lichtleitern ermöglicht insbesondere eine sehr einfache Realisierung des ersten Beispiels der optischen Kommutierung, bei dem eine Umsetzung der winkelaufgelösten Strahlungen in radial aufgelöste Strahlungen vorgesehen ist.

Eine einfache Möglichkeit, die auf die Oberfläche des Hohlraums zu richtende optische Strahlung in den Hohlraum einzukoppeln, sieht einen im ersten Sondenteil angeordneten Zentralkanal vor, der gleichzeitig zum Auskoppeln der von der Oberfläche zurückgeworfenen Strahlung im Hellfeld vorgesehen sein kann.

Der Zentralkanal kann beispielsweise als Hohlrohr ausgebildet sein. Vorzugsweise enthält der Zentralkanal als Hilfsmittel zur Strahlführung eine Linsenoptik mit wenigstens einer Linse. Besonders vorteilhaft ist der Einsatz von zylinderförmigen Linsen, die eine radiusabhängige Brechzahl aufweisen. Diese Maßnahmen erzeugen eine konvergente Strahlung, die im Durchmesser begrenzt ist. Beugungserscheinungen an der Innenwand des Zentralkanals, die sich als Störstrahlung bemerkbar machen würde, werden verhindert.

Eine vorteilhafte Ausgestaltung der erfindungsgemäßen Vorrichtung zum Prüfen von Oberflächen sieht vor, daß das erste Sondenteil einen Umlenkspiegel enthält, der die von der Oberfläche zurückgeworfene Strahlung um einen Winkel von wenigstens näherungsweise 90° ablenkt in Richtung des ersten Sondenteils. Der Umlenkspiegel kann gleichzeitig die vorzugsweise durch den Zentralkanal im ersten Sondenteil eingekoppelte Strahlung auf die Oberfläche des Hohlraums ablenken.

Eine Weiterbildung sieht vor, daß der Umlenkspiegel als abbildendes Element ausgestaltet ist. Eine Abbildungseigenschaft wird beispielsweise durch eine sphärisch ausgestaltete Oberfläche erreicht. Ein als abbildendes Element ausgestalteter Umlenkspiegel spart gegebenenfalls ein ansonsten an anderer Stelle erforderliches abbildendes optisches Element ein.

Die erfindungsgemäße Vorrichtung zum Prüfen von Oberflächen in Hohlräumen ist insbesondere geeignet zum Prüfen von Oberflächen in Bohrungen.

Weitere vorteilhafte Ausgestaltungen und Weiterbildungen der erfindungsgemäßen Vorrichtung zum Prüfen von Oberflächen in Hohlräumen ergeben sich aus weiteren abhängigen Ansprüchen in Verbindung mit der folgenden Beschreibung.

### Zeichnung

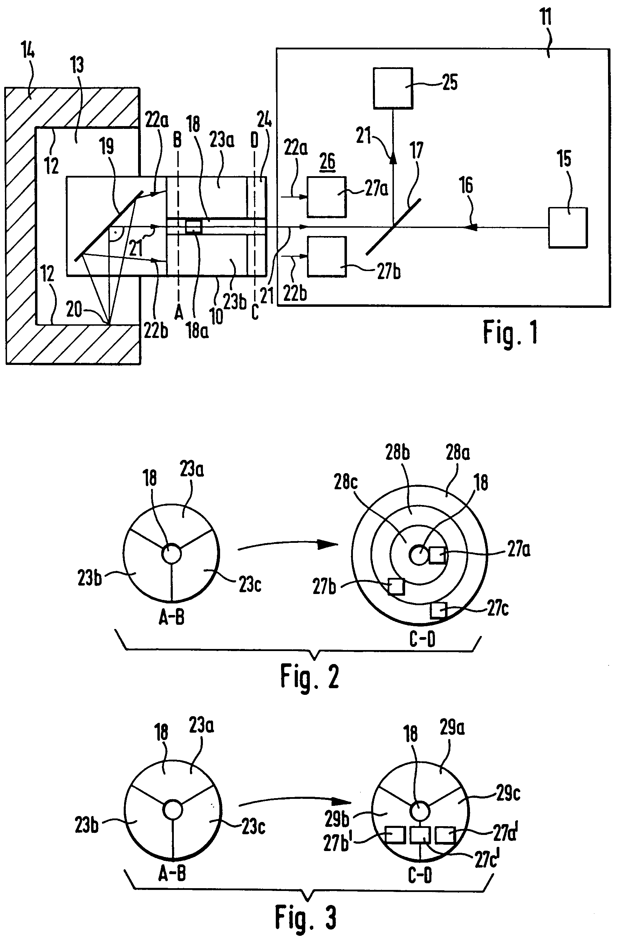

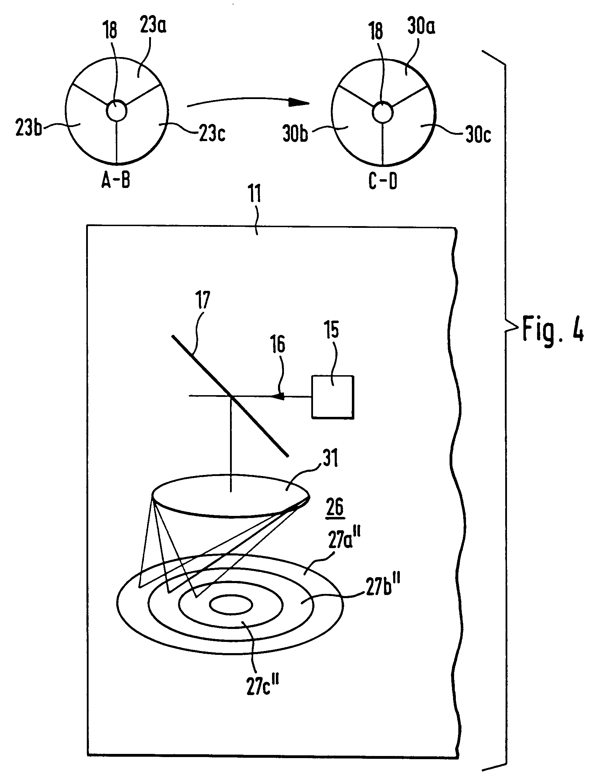

Figur 1 zeigt ein Schnittbild durch eine erfindungsgemäße Vorrichtung zum Prüfen von Oberflächen in Hohlräumen, Figuren 2 und 3 zeigen Ausgestaltungen eines optischen Kommutators und Figur 4 zeigt eine weitere Ausgestaltung eines optischen Kommutators in Verbindung mit ringförmigen Strahlungssensoren.

In Figur 1 sind ein erstes Teil 10 und ein zweites Teil 11 einer Sonde zum Prüfen von Oberflächen 12 in Hohlräumen 13 eines Werkstücks 14 gezeigt. Das erste Sondenteil 10 taucht in den Hohlraum 13 des Werkstücks 14 ein. Das erste Sondenteil 10 kann mittels einer nicht näher gezeigten Vorrichtung eine Drehbewegung ausführen gegenüber dem feststehenden Werkstück 14. Die Drehbewegung des ersten Sondenteils 10 tritt auch gegenüber dem ebenfalls feststehenden zweiten Sondenteil 11 auf.

Das zweite Sondenteil 11 enthält eine Strahlungsquelle 15, die eine Meßstrahlung 16 abgibt. Die Meßstrahlung 16 geht durch einen Strahlteiler 17 und gelangt anschließend in einen im ersten Sondenteil 10 angeordneten zentralen Kanal 18, in welchem eine Zylinderlinse 18a enthalten ist. Nach dem Verlassen des zentralen Kanals 18 wird die Meßstrahlung 16 von einem Umlenkspiegel 19 unter einem Winkel von wenigstens näherungsweise 90° auf die Oberfläche 12 des Werkstücks 14 reflektiert. Am Auftreffort 20 der Meßstrahlung 16 auf der Oberfläche 12 tritt eine Beugung und eine Reflexion der Meßstrahlung 16 auf in Abhängigkeit von der Oberflächenbeschaffenheit. Die am Auftreffort 20 zurückgeworfene Strahlung tritt in einem bestimmten Winkelbereich auf. Die zurückgeworfene Strahlung setzt sich zusammen aus einer Hellfeldstrahlung 21 und einer Dunkelfeldstrahlung 22a, 22b. Die Hellfeldstrahlung 21 gelangt über den zentralen Kanal 18 mit der Zylinderlinse 18a zurück zum zweiten Sondenteil 11. Die Dunkelfeldstrahlung 22a, b, die außerhalb des zentralen Kanals 18 auftritt, wird über Strahlführungen 23a, 23b und einen optischen Kommutator 24 zum zweiten Sondenteil 11 geleitet.

Im zweiten Sondenteil 11 sind eine erste Sensoranordnung 25 sowie eine zweite Sensoranordnung 26 enthalten. Die erste Sensoranordnung 25 detektiert die Hellfeldstrahlung 21, die mit dem Strahlteiler 17 ausgekoppelt und von der Meßstrahlung 16 getrennt wird. Die zweite Sensoranordnung 26, von der ein erster und zweiter Strahlungssensor 27a, 27b eingetragen sind, empfängt die Dunkelfeldstrahlung 22a, 22b.

Die erfindungsgemäße Vorrichtung zum Prüfen von Oberflächen 12 in Hohlräumen 13 arbeitet folgendermaßen:
Die von der Strahlungsquelle 15 abgegebene Meßstrahlung 16 wird auf die zu prüfende Oberfläche 12 des Werkstücks 14 gerichtet. Die Trennung der Sonde in einen ersten und zweiten Sondenteil 10, 11 ermöglicht die Ausgestaltung des ersten Sondenteils 10 als drehbares Teil. Eine hohe Winkelbeschleunigung sowie eine hohe Drehzahl werden erreicht, wenn das erste Sondenteil 10 eine geringe Unwucht und insbesondere ein geringes Trägheitsmoment aufweist. Die für die Drehbewegung erforderlichen Vorrichtungen sind in Figur 1 nicht näher eingetragen. Der wesentliche Vorteil einer Drehbewegung liegt darin, daß das Werkstück 14 nicht bewegt zu werden braucht. Im gezeigten Ausführungsbeispiel gemäß Fig. 1 ist als Hohlraum 13 eine im Werkstück 14 eingebrachte Bohrung gezeigt. Durch die Drehbewegung und eine lineare Verschiebung in Richtung des zentralen Kanals 18 ist eine Überprüfung der gesamten Oberfläche 12 möglich. Das erste Sondenteil 10 ermöglicht auf einfache Weise eine gleichzeitige Messung der Hell- sowie der Dunkelfeldstrahlung 21, 22a, 22b, wobei die Dunkelfeldstrahlung 22a, 22b, bei Bedarf nach dem Winkel der zurückgeworfenen Strahlung aufgelöst werden kann. Mit dieser Maßnahme ist es möglich, nicht nur die Intensität der direkt reflektierten Strahlung in jedem Punkt der Oberfläche 20 zu ermitteln, sondern zusätzlich auch die Intensität und die Richtungsverteilung der seitlich gestreuten und gegebenenfalls gebeugten Strahlung festzustellen.

Die Dunkelfeldstrahlung 22a, 22b wird in der Strahlungsführung 23a, 23b weitergeleitet. Die erste Sensoranordnung 25, welche die Hellfeldstrahlung 21 erfaßt, sowie die zweite Sensoranordnung 26 sind im zweiten Sondenteil 11 enthalten, das in Ruhe ist. Sofern die Dunkelfeldstrahlung 22a, 22b lediglich pauschal von der zweiten Sensoranordnung 26 erfaßt werden soll, wozu ein Strahlungssensor 27a, 27b bereits ausreicht, sind keine besonderen Maßnahmen zwischen den beiden Sondenteilen 10, 11 erforderlich. Eine winkelaufgelöste Messung der Dunkelfeldstrahlung 22a, 22b, die in mehreren, voneinander getrennten Strahlführungen 23a, 23b weitergeleitet wird, ist mit dem optischen Kommutator 24 möglich, der eine feste Zuordnung der einzelnen Strahlungssensoren 27a, 27b zu den einzelnen Strahlführungen 23a, 23b sicherstellt.

Sowohl die Hellfeldstrahlung 21 als auch die Meßstrahlung 16 werden durch den Zentralkanal 18 geleitet, in welchem vorzugsweise optische Elemente angeordnet sind, die eine konvergente Strahlführung sicherstellen. Mit dieser Maßnahme wird ein Auftreffen der Meßstrahlung 16 an der Begrenzung des Zentralkanals 18 vermieden, wobei Beugungseffekte auftreten könnten, die zu einer unerwünschten Störstrahlung führen würden. Als optische Elemente sind beispielsweise die in Figur 1 eingetragene wenigstens eine Zylinderlinse 18a vorgesehen. Geeignet ist auch eine in der Figur 1 nicht näher gezeigte Linsenoptik, die ein System von vorzugsweise mehreren Linsen enthält, die beispielsweise im doppelten Abstand ihrer jeweiligen Brennweiten angeordnet sind. Die in Figur 1 eingetragene Zylinderlinse 18a ist vorzugsweise eine Zylinderlinse 18a mit radiusabhängiger Brechzahl. Solche Linsen werden als "Gradient Index Lenses" bezeichnet. Zu beziehen sind solche Zylinderlinsen 18a beispielsweise von der Firma Melles Griot, die die Firmenschrift "Optics Guide 5, ISSN 1061-4384, 1876 115M 1290, 1990, S. 20 - 58 bis 20 - 60 herausgegeben hat.

Der Umlenkspiegel 19, der sowohl die Meßstrahlung 16 als auch die Hell- und Dunkelfeldstrahlungen 21, 22a, 22b um einen vorgegebenen Winkel von beispielsweise wenigstens näherungsweise 90° auf die Oberfläche 12 des Werkstücks 14 ablenkt, ist vorzugsweise als abbildendes Element ausgestaltet. Abbildungseigenschaften werden beispielsweise durch eine sphärische Oberfläche des Umlenkspiegels 19 oder andere geeignete Maßnahmen erreicht. Durch die Ausgestaltung des Umlenkspiegels 19 als abbildendes Element können optische Elemente, die an anderer Stelle im Strahlengang gegebenenfalls erforderlich sind, entfallen oder deren Anzahl zumindest reduziert werden.

In Figur 2 ist ein erstes Ausführungsbeispiel des optischen Kommutators 24 näher gezeigt. Das linke Teilbild von Figur 2 zeigt ein Schnittbild des ersten Sondenteils 10 entlang der in Figur 1 eingetragenen Schnittlinie A-B. Der zentrale Kanal 18 ist umgeben von beispielsweise drei Strahlführungen 23a, 23b, 23c. Der zwischen dem linken und rechten Teilbild von Figur 2 eingetragene Pfeil bedeutet, daß die im linken Teilbild gezeigten kreissegmentförmigen Strahlführungen 23a, 23b, 23c im optischen Kommutator 24 übergehen in radial aufgelöste, kreisringförmige Segmente 28a, 28b, 28c, die sich nicht überlappen. Das rechte Teilbild zeigt ein Schnittbild durch den in Figur 1 gezeigten optischen Kommutator 24 entlang der Schnittlinie C-D. Die Transformation vom linken zum rechten Teilbild von Figur 2 ist beispielsweise mit speziell geformten Lichtleitern problemlos möglich. Die winkelaufgelöste Information durch die Strahlführungen 23a, 23b, 23c geht über in eine radialaufgelöste Information durch die kreisringförmigen Segmente 28a, 28b, 28c, die in besonders einfacher Weise zum ruhenden Sondenteil 11 übertragbar ist. Die zweite Sensoranordnung 26 enthält im gezeigten Ausführungsbeispiel die drei Strahlungssensoren 27a, 27b, 27c, wobei jeweils wenigstens ein Strahlungssensor 27a, 278b, 27c für ein kreisringförmiges Segment 28a, 28b, 28c vorgesehen ist.

Eine andere Ausgestaltung des optischen Kommutators 24 ist in Figur 3 gezeigt. Im linken Teilbild von Figur 3 ist wieder ein Schnittbild entlang der Schnittkante A-B des ersten Sondenteils 10 gemäß Figur 1 dargestellt. Der durch den Pfeil symbolisierte Übergang zum optischen Kommutator 24 im rechten Teilbild von Figur 3, der einem Schnittbild entlang der Schnittlinie C-D des optischen Kommutators 24 gemäß Figur 1 entspricht, zeigt, daß die geometrische Struktur der im linken Teilbild gezeigten Strahlführungen 23a, 23b, 23c, vollständig erhalten bleibt. Erfindungsgemäß ist vorgesehen, daß jeder Strahlführung 23a, 23b, 23c mittels Wellenlängencodieren 29a, 29b, 29c jeweils unterschiedliche Wellenlängen zugeordnet werden. Die Anordnung der Strahlungssensoren 27a', 27b', 27c' im zweiten Sondenteil 11 ist derart vorzunehmen, daß lediglich sichergestellt ist, daß bei einer Drehbewegung des ersten Sondenteils 10 sämtliche Strahlungssensoren 27a', 27b', 27c' bestrahlt werden können. Die Strahlungssensoren 27a', 27b', 27c' sind auf die jeweilige Wellenlänge der zugeordneten Strahlführung 23a, 23b, 23c abzustimmen. Diese Abstimmung erfolgt beispielsweise mit in Figur 3 nicht näher gezeigten wellenlängenselektiven Filtern oder beispielsweise mit einer Gitteranordnung.

Figur 4 zeigt eine weitere Ausgestaltung des optischen Kommutators 24. Im linken Teilbild von Figur 4 ist wieder ein Schnittbild entlang der Schnittkante A-B des ersten Sondenteils 10 gemäß Figur 1 gezeigt, das die kreissegmentförmigen Strahlführungen 23a, 23b, 23c mit dem zentralen Kanal 18 enthält. Im rechten Teilbild von Figur 4 ist ein Schnittbild entlang der Schnittkante C-D des optischen Kommutators 24 gemäß Figur 1 gezeigt. Die geometrische Anordnung der im linken Teilbild gezeigten Strahlführungen 23a, 23b, 23c bleibt gemäß dem rechten Teilbild vollständig erhalten. Der optische Kommutator enthält jedoch den Strahführungen 23a, 23b, 23c zugeordnete holografisch-optische Elemente 30a, 30b, 30c. Die holografisch-optischen Elemente 30a, 30b, 30c weisen eine beugende Struktur auf, die eine Strahlung in eine bestimmte Richtung ablenkt. Als vorgegebene Richtung wird vorzugsweise ein bestimmter Radius gewählt. Die Struktur der holografisch-optischen Elemente 30a, 30b, 30c wird vorzugsweise berechnet. Holographisch-optische Elemente sind beispielsweise aus dem Fachzeitenschriftenbeitrag "Optical Technology for compact disc pickups" von Wai-Hon Lee in "LASERS & OPTRONICS", September 1987, S. 85 - 87 bekannt.

Die von den holografisch-optischen Elementen 30a, 30b, 30c im optischen Kommutator 24 abgegebene Strahlung gelangt zum zweiten Sondenteil 11, wo sie der Strahlteiler 17 auf eine speziell ausgestaltete zweite Sensoranordnung 26 ablenkt. Die zweite Sensoranordnung 26 enthält eine Abbildungsoptik 31, welche die Dunkelfeldstrahlung auf ringförmige Strahlungssensoren 27a'', 27b'', 27c'' abbildet. Jedem holografisch-optischen Element 30a, 30b, 30c des optischen Kommutators 24 ist wenigstens ein ringförmiger Strahlungssensor 27a'', 27b'', 27c'' zugeordnet.

Die Strahlungsquelle 15 ist vorzugsweise eine Weißlichtquelle, die zumindest diejenigen Spektralanteile enthält, die bei der anhand von Figur 3 beschriebenen Wellenlängencodierung im optischen Kommutator 24 benötigt werden. Geeignete monochromatische Lichtquellen sind beispielsweise Halbleiterlaser oder Leuchtdioden. Dem Vorteil des Halbleiterlasers, eine hohe Strahlintensität und eine geringe Divergenz der Strahlung, steht der Nachteil des höheren Preises von Leuchtdioden gegenüber. Um insbesondere die für die Wellenlängencodierung im optischen Kommutator 24 benötigten unterschiedlichen Wellenlängen bereitstellen zu können, sind vorzugsweise entweder mehrere Halbleiterlaser oder mehrere Leuchtdioden als Strahlungsquelle 15 vorgesehen, welche zusammen die benötigten Wellenlängen erzeugen.

## Patentansprüche

1. Vorrichtung zum Prüfen von Oberflächen in Hohlräumen, bei der auf eine zu prüfende Oberfläche eine optische Strahlung gerichtet ist und die von der Oberfläche zurückgeworfene Strahlung als Kriterium für die Oberflächenbeschaffenheit ausgewertet wird, mit einer zumindest teilweise in den Hohlraum eintauchenden Sonde, die wenigstens zwei getrennte Strahlführungen zum winkelaufgelösten Weiterleiten der von der Oberfläche zurückgeworfenen Strahlung zu einer Sensoranordnung aufweist, die für jede Strahlführung wenigstens einen Strahlungssensor enthält, dadurch gekennzeichnet, daß ein erstes, in den Hohlraum eintauchendes Teil (10) der Sonde, das die Strahlführungen (23a, 23b, 23c) enthält, drehbar ist gegenüber einem zweiten, ruhenden Teil (11) der Sonde, das die Sensoranordnung (25, 26) enthält.

2. Vorrichtung nach Anspruch 1, dadurch gekennzeichnet, daß eine optische Kommutierung (24) vorgesehen ist, die eine Zuordnung der in den Strahlführungen (23a, 23b, 23c) des ersten Teils (10) weitergeleiteten Strahlungen zu den den Strahlführungen (23a, 23b, 23c) zugeordneten Strahlungssensoren (27a, 27b, 27c; 27a', 27b', 27c'; 27a'', 27b'', 27C'') vornimmt.

3. Vorrichtung nach Anspruch 2, dadurch gekennzeichnet, daß die im ersten Teil (10) angeordneten Strahlführungen (23a, 23b, ,23c) die winkelaufgelösten Strahlungen (22a, 22b) in entsprechende, radial aufgelöste Strahlungen umsetzt, die zur Übertragung an das weite Teil (11) vorgesehen sind.

4. Vorrichtung nach Anspruch 2, dadurch gekennzeichnet, daß im ersten Teil (10) Wellenlängencodierer (29a, 29b, 29c) vorgesehen sind, die den Strahlführungen (23a, 23b, 23c) jeweils unterschiedliche Wellenlängen der optischen Strahlung zuordnen, und daß die wellenlängencodierten Strahlungen zur Übertragung an das zweite Teil 11 vorgesehen sind.

5. Vorrichtung nach Anspruch 2, dadurch gekennzeichnet, daß den im ersten Teil (10) angeordneten Strahlführungen (23a, 23b, 23c) holografisch-optische Elemente (30a, 30b, 30c) zugeordnet sind, und daß die von den holografisch-optischen Elementen (30a, 30b, 30c) abgegebenen Strahlungen zur Übertragung zum zweiten Teil (11) vorgesehen sind.

6. Vorrichtung nach Anspruch 1, dadurch gekennzeichnet, daß das erste Sondenteil (10) rotationssymmetrisch ist.

7. Vorrichtung nach Anspruch 1 oder 2, dadurch gekennzeichnet, daß die Strahlführungen (23a, 23b, 23c) mit Lichtleitern realisiert sind.

8. Vorrichtung nach Anspruch 1, dadurch gekennzeichnet, daß das erste Sondenteil (10) einen zentralen Kanal (18) enthält zum Führen einer eingekoppelten, auf die Oberfläche (12) zu richtenden Meßstrahlung (16).

9. Vorrichtung nach Anspruch 1, dadurch gekennzeichnet, daß das erste Sondenteil (10) einen Umlenkspiegel (19) enthält, der die eingekoppelte Meßstrahlung (16) in Richtung auf die Oberfläche (12) um einen Winkel von wenigstens näherungsweise 90° ablenkt.

10. Vorrichtung nach Anspruch 1, dadurch gekennzeichnet, daß das erste Sondenteil (10) einen Umlenkspiegel (19) enthält, der als abbildendes Element ausgestaltet ist.

11. Vorrichtung nach Anspruch 1, dadurch gekennzeichnet, daß als Strahlungsquelle (15) eine Weißlichtquelle eingesetzt ist.

12. Vorrichtung nach Anspruch 1, dadurch gekennzeichnet, daß als Strahlungsquelle (15) wenigstens ein Halbleiterlaser eingesetzt ist.

13. Vorrichtung nach Anspruch 1, dadurch gekennzeichnet, daß als Strahlungsquelle (15) wenigstens eine Leuchtdiode eingesetzt ist.

14. Vorrichtung nach Anspruch 8, dadurch gekennzeichnet, daß zur Strahlungsführung im zentralen Kanal (18) abbildende optische Elemente eingesetzt sind, die eine radiusabhängige Brechzahl aufweisen.

15. Vorrichtung nach Anspruch 8, dadurch gekennzeichnet, daß zur Strahlungsführung im zentralen Kanal (18) eine Linsenoptik eingesetzt ist, die wenigstens eine Linse enthält.

16. Vorrichtung nach Anspruch 1, gekennzeichnet durch die Verwendung zum Prüfen von Bohrungen in Werkstücken (14).
